# EUROPÄISCHE PATENTSCHRIFT

(11) **EP 3 817 166 B1**
(45) Veröffentlichungstag und Bekanntmachung des Hinweises auf die Patenterteilung: **23.11.2022**
(21) Anmeldenummer: 20184674.8
(22) Anmeldetag: 08.07.2020
(51) Int. Cl.: H02G 1/12

(54) **ADAPTIVE ABISOLIERUNG**
ADAPTIVE STRIPPING
DÉNUDAGE ADAPTATIF

(30) Priorität: 28.10.2019 DE 102019216555
(43) Veröffentlichungstag der Anmeldung: 05.05.2021
(73) Patentinhaber: Otto Bihler Handels-Beteiligungs-GmbH, 87642 Halblech (DE)
(72) Erfinder: MUCHE, Norbert, 87669 Rieden (DE); SCHWARZENBACH, Max, 87669 Rieden (DE)
(74) Vertreter: Weickmann & Weickmann PartmbB

(56) Entgegenhaltungen:
- EP-A1- 2 693 581
- EP-A1- 3 121 918
- EP-A1- 3 550 684
- CN-U- 207 868 724
- GB-A- 2 458 720
- US-A- 4 615 116

## Beschreibung

Die vorliegende Erfindung betrifft eine Vorrichtung sowie ein Verfahren zum adaptiven Abisolieren von isolierten flachen metallischen Drähten.

Es ist aus dem Stand der Technik bekannt, flache metallische Drähte, beispielsweise Kupfer-Lackdrähte mit fest eingestellten mechanischen Vorrichtungen abzuisolieren. Hierbei ist der Begriff des "flachen Drahts" derart zu verstehen, dass der entsprechende Draht ein Querschnittsprofil aufweist, welches wenigstens ein Paar von sich gegenüberliegenden, im Wesentlichen ebenen Seiten umfasst, welche im Folgenden als "flache Seiten" bezeichnet werden. Wenngleich diese Definition selbstverständlich auch Drähte mit einem quadratischen Querschnitt umfasst, so bezieht sich die vorliegende Erfindung in erster Linie auf Drähte, in denen die Breite der genannten flachen Seiten wesentlich größer ist als ihr Abstand voneinander, sodass sie von deutlich kürzeren, im Folgenden als "schmale Seiten" bezeichneten, Seiten verbunden sind, die selbst eben oder gewölbt sein können.

Wenngleich derartige flache metallische Drähte in der Regel derart hergestellt werden können, dass die Dicke des eigentlichen metallischen Drahts sehr genau innerhalb kleiner Toleranzen kontrolliert werden kann, so zeigt es sich doch, dass dies nicht im selben Maße für die Dicke der isolierenden Lackschicht gilt, die in der Regel, insbesondere an den beiden einander gegenüberliegenden flachen Seiten des isolierten Drahts, unterschiedlich stark sein wird.

Aufgrund dieser in der Regel unterschiedlichen Dicken der isolierenden Schicht an gegenüberliegenden flachen Seiten des Drahts muss die oben bereits angesprochene fest eingestellte mechanische Vorrichtung derart eingestellt sein, dass auch die dickste in der Praxis vorkommende Lackschicht zuverlässig abgetragen wird, um sicherzustellen, dass keine Reste der Isolierung mehr an dem Draht verbleiben, was eine korrekte Kontaktierung in elektrotechnischen Anwendungen unmöglich machen würde.

Sollte jedoch in diesem Fall die Lackschicht dünner sein als dieser anhand der maximalen Schichtdicke eingestellte Wert, so wird bei einem Abisoliervorgang zwangsläufig auch ein Teil des metallischen Drahts selbst abgetragen, was eine Querschnittverringerung dieses Drahts zur Folge haben wird. Diese Tatsache, dass in Vorrichtungen zum Abisolieren aus dem Stand der Technik in der Regel auch ein Teil des metallischen Drahts selbst abgetragen wird, hat einige Nachteile sowohl hinsichtlich der zu erzielenden Qualität der Drähte als auch der Lebensdauer der eingesetzten Vorrichtung. Einerseits wird nämlich hierdurch die Standzeit der Vorrichtung ebenso wie die Abnutzung der in der Vorrichtung eingesetzten Schneidelemente verringert und andererseits verschlechtert sich selbstverständlich auch die Oberflächengüte des metallischen Drahts.

Wenngleich diese Nachteile von Vorrichtungen aus dem Stand der Technik seit längerem bekannt sind, so gab es bisher noch keine ausreichende Motivation, hier eine Verbesserung anzustreben, da sich die genannten Nachteile in der Praxis nicht in einer derartigen Weise gezeigt haben, dass ein unmittelbarer Handlungsbedarf gegeben gewesen wäre. Allerdings sind in jüngerer Zeit verstärkt Einsatzzwecke für derartige flache metallische Drähte aufgekommen, die eine äußerst präzise Einstellung der Dicke des metallischen Drahts auch in abisoliertem Zustand erfordern. Ein Beispiel hierfür liegt in der Verwendung solcher Drähte in Elektromotoren, die mit einem großen Strom zu betreiben sind und in denen folglich das Auftreten von Abschnitten mit erhöhtem elektrischen Widerstand, die häufig als "Hotspots" bezeichnet werden und durch einen lokal verringerten Querschnitt eines verwendeten Drahts gebildet sein können, in jedem Fall vermieden werden muss. Somit ist in Herstellungsprozessen derartiger metallischer Drähte und vorliegend insbesondere bei ihrem Abisolieren unbedingt darauf zu achten, dass keine Querschnittsreduzierungen des metallischen Drahts selbst bei der Entfernung seiner Isolierung eintritt.

Ein Beispiel einer Vorrichtung zum Abisolieren von Drähten ist aus der CN 207 868 724 U bekannt, welche eine Dicke eines Drahts und seiner Isolierung erfasst und den Abisolierungsvorgang auf dieser Grundlage anpasst. Der Vollständigkeit halber sei ferner auf die EP 3 121 918 A1 und die EP 2 693 581 A1 verwiesen.

Bisher für ähnliche Zwecke verwendete, fest eingestellte mechanische Vorrichtungen sind hierzu, wie oben ausgeführt, nicht geeignet, insbesondere wenn die Schichtdicke der Isolierung an den beiden einander gegenüberliegenden flachen Seiten des Drahts unterschiedlich ist. Zwar besteht prinzipiell auch noch die Möglichkeit, die Isolierung derartiger isolierter metallischer Drähte mithilfe eines Laserstrahls abzutragen, wodurch eine von der Schichtdicke unabhängige Möglichkeit zum Abisolieren des Drahts geschaffen wird, es zeigt sich jedoch, dass hierdurch durch verbrannte Rückstände des Lacks ein hoher Anteil an Verschmutzungen unvermeidlich ist, die sich sowohl auf der Optik der Laservorrichtung als auch auf anderen Komponenten niederschlagen und aufwendig abgesaugt werden müssen.

Es ist somit die Aufgabe der vorliegenden Erfindung, eine Vorrichtung und ein Verfahren zum adaptiven Abisolieren von isolierten flachen metallischen Drähten bereitzustellen, in denen ein mechanisches Abtragen der isolierenden Schicht in einer Weise durchgeführt wird, die einerseits sicherstellt, dass das gesamte isolierende Material von dem metallischen Draht abgetragen wird, aber andererseits auch sicherstellt, dass der metallische Draht selbst hiervon nicht beeinträchtigt oder in seinem Querschnitt verringert wird.

Zu diesem Zweck betrifft die vorliegende Erfindung zunächst eine Vorrichtung zum adaptiven Abisolieren von isolierten flachen metallischen
Drähten nach Anspruch 1.

Es ist demzufolge der Verdienst der Erfinder der vorliegenden Erfindung, erkannt zu haben, dass das mechanische Abisolieren mit seinen bekannten Vorteilen, nämlich der schnellen, einfachen und relativ rückstandslosen Entfernung der isolierenden Schicht von flachen metallischen Drähten, in einer Weise durchführbar ist, bei der dennoch sichergestellt ist, dass der metallische Draht selbst in seinem Durchmesser und somit in seinem elektrischen Widerstand nicht beeinträchtigt wird. Hierbei wird als mechanisches Abisoliermittel der Vorrichtung zum mechanischen Abisolieren in der Regel eine als "Messer" bezeichnete, in einer geeigneten Halterung gehalterte Klinge verwendet, welche zunächst in isolierende Schicht eingeführt und dann entlang der Längsrichtung des Drahts gezogen wird, um das isolierende Material, in der Regel einen Lack, von dem Metall abzulösen. Es ist ferner ein Verdienst der Erfinder, erkannt zu haben, dass die wenigstens eine Vorrichtung zum Erfassen einer Dicke der Isolierung einen Wirbelstromsensor umfassen kann, wobei ein solcher Sensor derart arbeitet, dass durch geeignete Mittel ein Wirbelstrom in dem metallischen Draht unterhalb seiner isolierenden Schicht induziert wird, dessen Eigenschaften wiederum durch ein geeignetes Empfangsmittel ausgelesen werden können. Durch die Verwendung von Wirbelströmen eignet sich ein solches Verfahren auch für Nichteisenmetall, wie beispielsweise Kupfer. Insbesondere ist das von dem Empfangsmittel ausgelesene Signal von der Dicke der isolierenden Schicht abhängig, da bei größeren Schichtdicken sowohl der induzierte Wirbelstrom als auch das von diesem außerhalb der Isolierung aufnehmbare Signal geringer wird und somit ein direkter Zusammenhang zwischen der Signalstärke und der Dicke der isolierenden Schicht hergestellt und ausgewertet werden kann. Derartige Wirbelstromsensoren sind zwar im Stand der Technik bekannt, wurden jedoch bisher ausschließlich in anderen Feldern der Werkstoffuntersuchung eingesetzt und es ist folglich ein weiterer Verdienst der vorliegenden Erfinder, in umfangreichen Versuchen erkannt zu haben, dass eine effiziente Messung einer Dicke einer Isolierung mittels derartiger Sensoren durchgeführt werden kann.

Alternativ oder zusätzlich kann die Vorrichtung zum Erfassen der Gesamtdicke des isolierten flachen metallischen Drahts einen Abstandssensor oder einen kraftbegrenzten Kontaktsensor umfassen. Auch derartige Sensortypen sind bereits aus dem Stand der Technik bekannt und frei auf dem Markt erhältlich und ermöglichen eine einfache, präzise und schnelle Messung der Gesamtdicke des Drahts im isolierten Zustand.

In der erfindungsgemäßen Vorrichtung umfasst die wenigstens eine Vorrichtung zum mechanischen Abisolieren ferner zwei koordiniert betreibbare Linearaktuatoren, von welchen ein erster dazu eingerichtet ist, das Abisoliermittel unter einem vorbestimmten Winkel, vorzugsweise einem rechten Winkel, zu dem abzuisolierenden Draht zu verlagern und damit die Abisoliertiefe einzustellen, und ein zweiter dazu eingerichtet sein, das mechanische Abisoliermittel entlang der Erstreckung, d.h. der Längsachse, des Drahts zu verlagern. Durch die derartige Entkopplung der Einstellung der Abisoliertiefe und des eigentlichen Durchführens des Abisolierens durch die Bewegung des Abisoliermittels
entlang der Erstreckung des Drahts kann eine praktisch beliebig genaue Einstellung der Parameter des Abisoliervorgangs während dessen Durchführung sichergestellt werden. Hierbei versteht sich, dass die eben genannte Zuordnung der beiden Bewegungsrichtungen des Abisoliermittels zu jeweils einem Linearaktuator eine Kopplung der Bewegungen dieser Aktuatoren nicht ausschließen soll.

Insbesondere können hierbei der erste und der zweite Linearaktuator mit im Wesentlichen parallelen Achsen ausgerichtet sein, wobei ferner eine Umlenkeinrichtung vorgesehen ist, welche dazu eingerichtet ist, die Linearbewegung des ersten Linearaktuators um den vorbestimmen Winkel umzulenken. Auf diese Weise wird eine besonders platzsparende Gestaltung der erfindungsgemäßen Vorrichtung erzielt, die sich beispielsweise hervorragend im Rahmen von aus dem Stand der Technik bekannten drahtverarbeitenden Stanzbiege- oder Folgeverbund-Anlagen integrieren lässt, in denen geeignete Linearaktuatoren ohnehin vorgesehen oder einsetzbar sein können.

In der eben beschriebenen Ausführungsform kann die Umlenkeinrichtung ferner derart eingerichtet sein, dass bei dem Umlenken der Linearbewegung ferner eine Untersetzung der Bewegung des ersten Linearaktuators hervorgerufen wird. Auf diese Weise kann eine noch präzisere Einstellung der Abisoliertiefe erzielt werden, als dies ohnehin schon mit einem geeigneten Linearaktuator möglich ist.

Alternativ oder zusätzlich können in dieser Ausführungsform der erste und der zweite Linearaktuator dazu eingerichtet sein, während eines Abisolierens wenigstens abschnittsweise eine synchrone Bewegung auszuführen. Auch durch diese Maßnahme kann sowohl die gewünschte Präzision als auch eine hervorragende Integration des Abisoliervorgangs bei hohen Taktzahlen sichergestellt werden.

Wenngleich unterschiedliche Ausführungsformen der erfindungsgemäßen Vorrichtung und demzufolge auch unterschiedliche Betriebsformen davon denkbar sind, beispielsweise das Abisolieren von lediglich einer der flachen Seiten oder ein aufeinander folgendes Abisolieren von einander gegenüberliegenden flachen Seiten mittels derselben Vorrichtung zum mechanischen Abisolieren, wobei der Draht zwischen den beiden Abisoliervorgängen entlang seiner Längsachse um 180° gedreht wird, so kann in einer bevorzugten Ausführungsform die Vorrichtung derart gebildet sein, dass sie zwei Vorrichtungen zum mechanischen Abisolieren umfasst, welche dazu eingerichtet sind, die beiden Seiten des abzuisolierenden Drahts aufeinander folgend abzuisolieren, wobei vorzugsweise eine der beiden Vorrichtungen zum mechanischen Abisolieren ferner eine profilierte Auflage umfasst, auf welcher der zugeführte Draht nach einem Abisolieren seiner ersten Seite für ein Abisolieren seiner zweiten Seite aufzulegen ist, wobei die Profilierung komplementär zu der erweiterten Kontur der bereits abisolierten Seite des Drahts ist.

Indem die beiden Vorrichtungen zum mechanischen Abisolieren beispielsweise derart angeordnet sind, dass sie die beiden flachen Seiten des Drahts ohne ein Drehen des Drahts dazwischen abisolieren können und folglich die Abisoliermittel der beiden Vorrichtungen zum Abisolieren um die genannten 180° gegeneinander winkelverlagert sind, kann nicht nur auf das relativ aufwendige Drehen des Drahts verzichtet werden, was eine weitere Maßnahme zur Erhöhung der Taktzahlen der erfindungsgemäßen Vorrichtung ist, sondern es kann durch die Profilierung auch noch die gewünschte Präzision des Abisoliervorgangs sichergestellt werden.

Zusätzlich kann die erfindungsgemäße Vorrichtung wenigstens eine weitere Vorrichtung zum Abisolieren umfassen, welche dazu eingerichtet ist, wenigstens eine die flachen Seiten des Drahts verbindende schmale Seite abzuisolieren. Hierbei kann ebenfalls auf eine mechanische Vorrichtung zum Abisolieren zurückgegriffen werden, prinzipiell könnte jedoch auch jede andere geeignete Vorrichtung zu diesem Zweck eingesetzt werden, beispielsweise auch eine Laservorrichtung, sofern dies beispielsweise aufgrund des Querschnittsprofils des Drahts vorteilhaft wäre.

Des Weiteren kann die erfindungsgemäße Vorrichtung ferner eine Schneideinheit umfassen, welche dazu eingerichtet ist, vor einem Abisolieren des Drahts diesen abzuschneiden und somit auf eine gewünschte Länge zu bringen und gleichzeitig das abzuisolierende Ende des Drahts beziehungsweise Drahtstücks zu definieren.

Weiterhin betrifft die vorliegende Erfindung ein Verfahren zum adaptiven Abisolieren von isolierten flachen metallischen Drähten nach Anspruch 9.

Hierbei kann die Erfassung der Dicke der Isolierung des zugeführten Drahts an beliebigen geeigneten Positionen durchgeführt werden, es bietet sich jedoch an, dies in einem Abschnitt des abzuisolierenden Drahts vorzunehmen, der tatsächlich während des Abisolierens abisoliert wird. Sollte dies gewünscht oder notwendig sein, so können selbstverständlich auch mehrere Messungen der Gesamtdicke des isolierten Drahts und/oder der Isolierung durchgeführt werden, um Mittelwerte oder andere abgeleitete Größen daraus zu bilden oder die Plausibilität der entsprechenden Messwerte zu überprüfen.

Insbesondere kann in dem erfindungsgemäßen Verfahren der zugeführte Draht aufeinander folgend an seinen beiden flachen Seiten abisoliert werden. Hierbei kann es zweckmäßig sein, für jede der beiden flachen Seiten des zugeführten Drahts jeweils wenigstens eine Dicke der Isolierung an wenigstens einer Position zu erfassen.

Alternativ oder zusätzlich kann jedoch auch eine bekannte Metalldicke des isolierten Drahts zur Einstellung der Vorrichtung zum Abisolieren herangezogen werden, wobei insbesondere die Abisoliertiefe beim Abisolieren der zweiten flachen Seite anhand der erfassten Gesamtdicke des isolierten Drahts, der erfassten Dicke der Isolierung an wenigstens einer Position der ersten flachen Seite und der bekannten Metalldicke eingestellt werden kann.

Wie bereits weiter oben angesprochen, ist nämlich bei der Herstellung derartiger isolierter flacher metallischer Drähte der Querschnitt des eigentlichen metallischen Drahts häufig sehr genau bekannt und unterliegt nur sehr geringen Toleranzen, sodass der vom Hersteller derartiger Drähte angegebene Wert der Dicke des Metalls in der genannten Weise verwendet und als korrekt vorausgesetzt werden kann. Insbesondere kann somit die Dicke der Isolierung an der zweiten flachen Seite als die erfasste Gesamtdicke des isolierten Drahts minus der erfassten oder abgeleiteten Dicke der Isolierung an der ersten Seite und der bekannten Metalldicke bestimmt werden.

Unter Umständen kann es wünschenswert sein, durch die Vorrichtung zum Abisolieren während eines Abisolierens ferner eine Fase in dem Metall des Drahts zu bilden. Dies kann beispielsweise dadurch geschehen, dass im Bereich des abzuisolierenden Endes des Drahts unmittelbar vor Erreichen des Endes das mechanische Abisoliermittel um einen gewünschten Betrag weiter in Richtung des Metalldrahts verlagert wird, sodass beispielsweise eine Stufe oder eine Schräge in das Metall getrieben wird.

Zuletzt kann das erfindungsgemäße Verfahren ferner einen Schritt eines Abisolierens wenigstens einer die flachen Seiten des Drahts verbindenden schmalen Seite mittels einer weiteren Vorrichtung zum Abisolieren umfassen.

Weitere Merkmale und Vorteile der vorliegenden Erfindung werden aus der nachfolgenden Beschreibung einer Ausführungsform davon deutlich, wenn diese zusammen mit den beiliegenden Figuren betrachtet wird. Diese zeigen im Einzelnen:
- Fig. 1: eine schematische Querschnittsansicht einer Ausführungsform einer erfindungsgemäßen Vorrichtung;
- Fig. 2: eine schräge Draufsicht auf die Vorrichtung aus Figur 1;
- Fig. 3a bis 3c: die Vorrichtung aus Figur 1 in drei Zuständen während eines Abisoliervorgangs;
- Fig. 4: eine Detailansicht eines Bereichs aus Figur 3c.

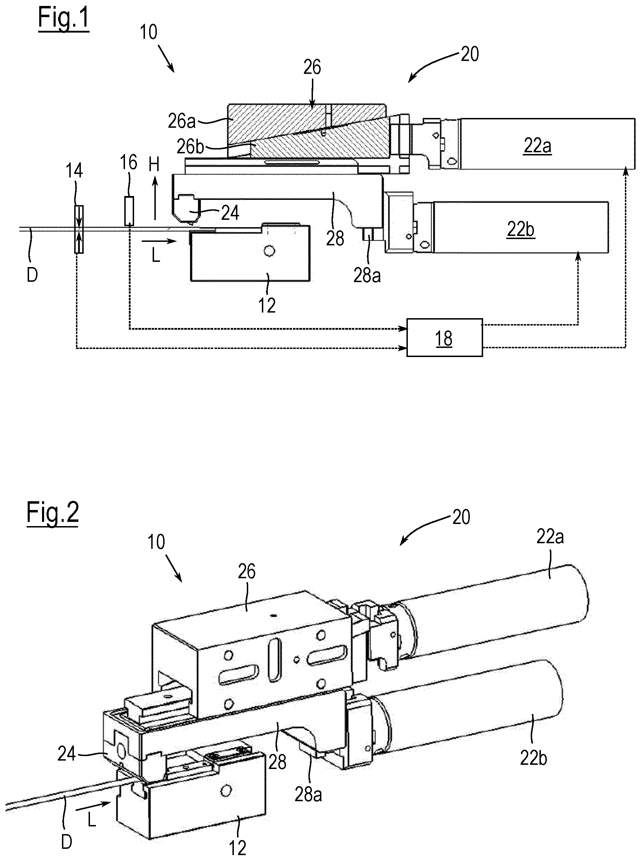

Die Figuren 1 und 2 zeigen zunächst einmal eine Ausführungsform einer erfindungsgemäßen Vorrichtung zum adaptiven Abisolieren von isolierten flachen metallischen Drähten, die ganz allgemein mit dem Bezugszeichen 10 bezeichnet ist. Die Vorrichtung 10 umfasst eine Auflageeinheit 12, auf welcher ein abzuisolierender flacher metallischer Draht D mit einer Längsachse L aufliegt, der ferner durch eine nicht dargestellte Spannvorrichtung fest in seiner gezeigten Position gehaltert ist.

Rein schematisch und aus Gründen der Übersichtlichkeit lediglich in Figur 1 ist ferner einerseits eine Vorrichtung zum Erfassen der Gesamtdicke des Drahts D dargestellt und mit dem Bezugszeichen 14 bezeichnet, die beispielsweise durch einen kraftbegrenzten Kontaktsensor gebildet sein kann, der zwei Backen umfasst, die sich auf den Draht D zubewegen, bis sie jeweils mit ihm in Kontakt kommen, woraufhin der Abstand der beiden Backen für eine Gesamtdicke des Drahts ausgewertet wird. Andererseits zeigt Figur 1 ebenfalls rein schematisch eine Vorrichtung zum Erfassen einer Dicke der Isolierung des zugeführten Drahts, die mit dem Bezugszeichen 16 bezeichnet ist und die derart angeordnet ist, dass sie die Dicke der oberen isolierenden Schicht des Drahts D bestimmen kann, beispielsweise über Wirbelstrominfluenz. Hierbei wird in der hier gezeigten Ausführungsform davon ausgegangen, dass die Gesamtdicke des Drahts D ebenso wie die Dicke der Isolierung an der Oberseite des Drahts D im Wesentlichen konstant sind, sodass jeweils eine einzelne Messung dieser Dicken beabstandet von dem eigentlich abzuisolierenden Bereich des Drahts D ausreichend ist, um den im Folgenden beschriebenen Abisoliervorgang mit der gewünschten Präzision auszuführen. Selbstverständlich könnten in weiteren Ausführungsformen einer erfindungsgemäßen Vorrichtung auch eine oder mehrere Messungen an anderen oder unterschiedlichen Positionen des Drahts durchgeführt werden, wobei bei einer Mehrzahl von Messungen beliebige Verarbeitungsschritte der so erfassten Daten vorgenommen werden können, beispielsweise das Bilden eines Durchschnitts oder die Überprüfung von maximal zulässigen Abweichungen zwischen den mehreren Messungen.

Sowohl die Vorrichtung zum Erfassen der Gesamtdicke des isolierten Drahts 14 als auch die Vorrichtung zum Erfassen der Dicke der Isolierung 16 liefern Daten an eine ebenfalls rein schematisch und lediglich in Figur 1 dargestellte Steuereinheit 18, welche die gemessenen Daten auswertet und gleichzeitig eine einstellbare Vorrichtung 20 zum mechanischen Abisolieren des Drahts D steuert. Die Steuereinheit kann hierbei durch an sich bekannte, für diesen Zweck geeignete Datenverarbeitungseinrichtungen gebildet sein, wie beispielsweise einen Mikrocontroller oder einen Computer, oder beispielsweise auch durch eine Steuereinrichtung einer Stanzbiege-Anlage gebildet oder mit ihr gekoppelt sein, falls die erfindungsgemäße Vorrichtung in einer derartigen Anlage integriert ist.

Die Vorrichtung 20 zum mechanischen Abisolieren umfasst einen ersten und einen zweiten Linearaktuator 22a und 22b, die jeweils Steuerbefehle von der Steuereinheit 18 empfangen und auf Grundlage dieser Steuerbefehle ein-und ausfahren, d.h. ihre Länge ändern. Hierbei ist der erste Linearaktuator 22a in erster Linie dazu vorgesehen, das als Schneidklinge 24 gebildete mechanische Abisoliermittel der Vorrichtung 20 zum mechanischen Abisolieren senkrecht zu der Längsachse L des Drahts D gemäß einer Höhenrichtung H zu verlagern, während der zweite Linienaktuator 22b in erster Linie dazu vorgesehen ist, das als mechanisches Abisoliermittel wirkende Messer 24 entlang der Längsrichtung L des Drahts D zu führen, um den eigentlichen Abisoliervorgang durchzuführen.

Zu diesem Zweck sind die beiden Linearaktuatoren 22a und 22b über eine Umlenkeinrichtung 26 miteinander gekoppelt, und der zweite Linearaktuator 22b trägt über ein Verbindungselement 28 das Messer 24 derart, dass durch das Abgleiten von zwei Keilen 26a und 26b der Umlenkeinheit 26 bei einem Ein- beziehungsweise Ausfahren des ersten Linearaktuators 22a eine Einstellung der Höhe des Messers 24 bezüglich des zweiten Linearaktuators 22b mittels einer Schiene 28a bewirkt wird, welche das Verbindungselement gleitbar an den zweiten Linearaktuator 22b ankoppelt. Da die beiden Linearaktuatoren 22a und 22b bezüglich der Höhenrichtung H ortsfest sind und ihre Linearbewegungen jeweils parallel zu der Längsachse L des Drahts verlaufen, wird durch die Einstellung der Höhe des Messers 24 gegenüber dem zweiten Linearaktuator 22b ebenfalls eine Höheneinstellung des Messers 24 gegenüber dem Draht D hervorgerufen. Da die beiden zusammenwirkenden Keile 26a und 26b ferner für eine Untersetzung der Bewegung des Linearaktuators 22a entlang der Richtung H sorgen, kann die entsprechende Einstellung der Position des Messers 24 in dieser Richtung H äußerst präzise ausgeführt werden.

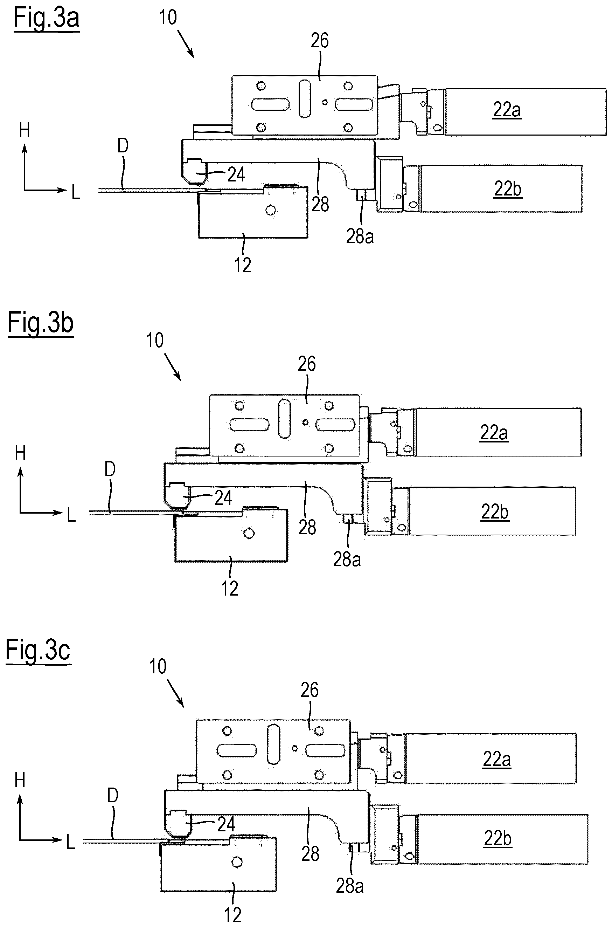

In den Figuren 3a bis 3c ist nun ein Abisoliervorgang anhand von drei Zuständen der Vorrichtung 20 zum mechanischen Abisolieren schematisch dargestellt. In dem in Figur 3a dargestellten Zustand ist zunächst der Draht D eingespannt worden und liegt auf dem Auflageelement 12 auf, wobei die Erfassungen der Gesamtdicke des Drahts durch die Vorrichtung 14 zum Erfassen der Gesamtdicke und der Dicke der Isolierung an der Oberseite des Drahts D durch die Vorrichtung 16 bereit stattgefunden haben, sodass die in Figur 3a nicht dargestellte Steuereinheit 18 in der Lage ist, eine korrekte Position des Messers 24 entlang der Richtung H zu bestimmen, die einer Eindringtiefe in die Isolierung des Drahts gemäß der Dicke dieser Isolierung an der oberen flachen Seite des Drahts D entspricht.

Anhand dieser Position bezüglich der Richtung H und der ihr bekannten Geometrie der Vorrichtung 20 berechnet nun die Steuereinheit 18 eine korrekte Ausfahrposition des ersten Linearaktuators 22a, wobei diese Ausfahrbewegung des ersten Linearaktuators 22a durch die Umlenkreinrichtung 26 in eine Bewegung des Messers 24 entlang der Höhenrichtung H mit einem kleinen Bewegungsanteil entlang der Längsrichtung L des Drahts D umgesetzt wird, die allerdings für den vorliegenden Abisoliervorgang unerheblich ist, da das Messer 24 hierbei durch einen Bereich der Isolierung läuft, der im folgenden Schritt ohnehin entfernt werden wird.

Figur 3b zeigt nun den Zustand, in welchem das Messer 24 auf die berechnete Position entlang der Richtung H abgesenkt worden ist, sodass das Messer 24 nun gerade die Isolierung auf der Oberseite des Drahts D durchdringt, ohne in das Metall des Drahts D selbst einzudringen.

Nun werden von der Steuereinheit 18 die beiden Linearaktuatoren 22a und 22b zu einem koordinierten Betrieb angewiesen, in welchem die Linearaktuatoren 22a und 22b derart parallel zueinander einfahren, dass das Messer 24 parallel zu der Erstreckungsrichtung des Drahts D über diesen in Figur 3b in Richtung nach rechts geführt wird. Somit findet der Übergang von Figur 3b zu 3c im Rahmen des Abisoliervorgangs statt, wobei durch den koordinierten Betrieb der beiden Linearaktuatoren 22a und 22b sichergestellt wird, dass lediglich die Isolierung des Drahts D abgetragen wird, und der Metallanteil des Drahts nicht beschädigt oder eingeschnitten wird.

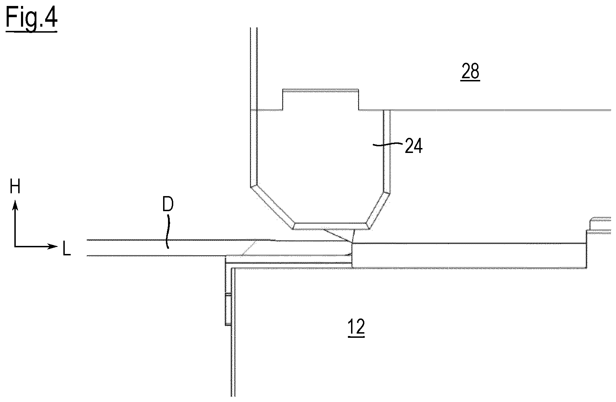

Figur 4 zeigt zuletzt eine vergrößerte Ansicht des rechten Endes des Drahtes D Figur 3c in einer Detailansicht, in welcher zu erkennen ist, dass an diesem abisolierten Ende des Drahtes D durch das Messer 24 eine Fase in den Draht D geschnitten worden ist, indem auf dem letzten Abschnitt des Abisoliervorgangs durch eine gezielte Ansteuerung des ersten Linearaktuators 22a zu einem gegenüber dem zweiten Linearaktuator 22b leicht verlangsamten Einfahrbetrieb das Messer 24 entlang der Höhenrichtung H noch einmal abgesenkt wird, während gleichzeitig der zweite Linearaktuator 22b mit unveränderter Geschwindigkeit weiterbetrieben wird, sodass im Bereich dieses Endes des Drahts D eine schräge Fase in den Draht D durch das Messer 24 geschnitten wird.

Wenngleich in den Figuren 1 bis 4 nicht dargestellt, so versteht sich, dass in einem weiteren Schritt auch noch die untere Seite der Isolierung des Drahts D durch eine Vorrichtung abisoliert werden könnte, die gegenüber der Vorrichtung 20 aus Figur 1 um die Ebene gespiegelt ist, die durch die Längsrichtung L des Drahts D und eine weitere Richtung senkrecht zu der Höhenrichtung H aufgespannt ist. Da zu diesem Zeitpunkt bereits die Gesamtdicke des Drahts D und die Dicke der mittlerweile abisolierten oberen Isolierung erfasst worden sind und ferner die Dicke des metallischen Anteils des Drahts selbst in der Regel bekannt ist, kann unter Umständen in der weiteren, nicht dargestellten zweiten Vorrichtung auf eine weitere Messung der Dicke der unteren Isolierung des Drahts D verzichtet werden, da sich diese aus den drei genannten Parametern ohne weiteres errechnen lässt.

## Patentansprüche

1. Vorrichtung (10) zum adaptiven Abisolieren von isolierten flachen metallischen Drähten (D), umfassend:
- wenigstens eine Vorrichtung zum Erfassen der Gesamtdicke (14) eines zugeführten isolierten metallischen Flachdrahts (D);
- wenigstens eine Vorrichtung zum Erfassen einer Dicke der Isolierung (16) des zugeführten isolierten metallischen Flachdrahts (D) an wenigstens einer Position;
- wenigstens eine einstellbare Vorrichtung (20) zum mechanischen Abisolieren des zugeführten isolierten metallischen Flachdrahts (D) an wenigstens einer seiner flachen Seiten, wobei die Vorrichtung zum mechanischen Abisolieren (20) hinsichtlich ihrer Abisoliertiefe einstellbar ist und ein mechanisches Abisoliermittel (24) umfasst; und
- eine Steuereinheit (18), welche mit der wenigstens einen Vorrichtung zum Erfassen der Gesamtdicke (14) und der wenigstens einen Vorrichtung zum Erfassen der Dicke der Isolierung (16) betriebsmäßig gekoppelt und dazu eingerichtet ist, die Vorrichtung zum mechanischen Abisolieren (20) hinsichtlich ihrer Abisoliertiefe auf Grundlage der erfassten Dicken einzustellen, **dadurch gekennzeichnet, dass** die wenigstens eine Vorrichtung zum mechanischen Abisolieren (20) zwei koordiniert betreibbare Linearaktuatoren (22a, 22b) umfasst, von welchen ein erster (22a) dazu eingerichtet ist, das Abisoliermittel (24) unter einem vorbestimmten Winkel, vorzugsweise einem rechten Winkel, zu dem abzuisolierenden Draht (D) zu verlagern und damit die Abisoliertiefe einzustellen, und ein zweiter (22b) dazu eingerichtet ist, das mechanische Abisoliermittel (24) linear entlang der Erstreckung des isolierten metallischen Flachdrahts (D) zu verlagern.

2. Vorrichtung (10) nach Anspruch 1,
wobei die wenigstens eine Vorrichtung zum Erfassen der Dicke der Isolierung (16) einen Wirbelstromsensor umfasst und/oder wobei die Vorrichtung zum Erfassen der Gesamtdicke (14) einen Abstandssensor oder einen kraftbegrenzten Kontaktsensor umfasst.

3. Vorrichtung (10) nach einem der vorhergehenden Ansprüche, wobei der erste und der zweite Linearaktuator (22a, 22b) mit im Wesentlichen parallelen Achsen ausgerichtet sind, wobei ferner eine Umlenkeinrichtung (26) vorgesehen ist, welche dazu eingerichtet ist, die Linearbewegung des ersten Linearaktuators (22a) um den vorbestimmten Winkel umzulenken.

4. Vorrichtung (10) nach Anspruch 3,
wobei die Umlenkeinrichtung (26) ferner derart eingerichtet ist, dass bei dem Umlenken der Linearbewegung ferner eine Untersetzung der Bewegung hervorgerufen wird.

5. Vorrichtung (10) nach Anspruch 3 oder 4,
wobei der erste und der zweite Linearaktuator (22a, 22b) dazu eingerichtet sind, während eines Abisolierens wenigstens abschnittsweise eine synchrone Bewegung auszuführen.

6. Vorrichtung (10) nach einem der vorhergehenden Ansprüche, umfassend zwei Vorrichtungen zum mechanischen Abisolieren (20), welche dazu eingerichtet sind, die beiden Seiten des abzuisolierenden isolierten metallischen Flachdrahts (D) aufeinanderfolgend abzuisolieren, wobei vorzugsweise eine der beiden Vorrichtungen zum mechanischen Abisolieren (20) ferner eine profilierte Auflage umfasst, auf welche der zugeführte isolierter metallischer Flachdraht (D) nach einem Abisolieren seiner ersten Seite für ein Abisolieren seiner zweiten Seite aufzulegen ist, wobei die Profilierung komplementär zu der erwarteten Kontur der bereits abisolierten Seite des isolierten metallischen Flachdrahts (D) ist.

7. Vorrichtung (10) nach einem der vorhergehenden Ansprüche, ferner umfassend wenigstens eine weitere Vorrichtungen zum Abisolieren, welche dazu eingerichtet ist, wenigstens eine die flachen Seiten des isolierten metallischen Flachdrahts (D) verbindende schmale Seite abzuisolieren.

8. Vorrichtung (10) nach einem der vorhergehenden Ansprüche, ferner umfassend eine Schneideinheit, welche dazu eingerichtet ist, vor einem Abisolieren des isolierten metallischen Flachdrahts (D) diesen abzuschneiden.

9. Verfahren zum adaptiven Abisolieren von isolierten flachen metallischen Drähten (D), durchzuführen in einer Vorrichtung (10) nach einem der vorhergehenden Ansprüche, umfassend die folgenden Schritte:
- Erfassen einer Gesamtdicke eines zugeführten isolierten metallischen Flachdrahts (D);
- Erfassen einer Dicke der Isolierung des zugeführten isolierten metallischen Flachdrahts (D) an wenigstens einer Position; und
- mechanisches Abisolieren des zugeführten isolierten metallischen Flachdrahts (D) mittels einer einstellbaren Vorrichtung zum mechanischen Abisolieren (20) an wenigstens einer seiner flachen Seiten, wobei die Einstellung einer Abisoliertiefe der Vorrichtung zum Abisolieren (20) anhand der erfassten Gesamtdicke des isolierten metallischen Flachdrahts (D) und der erfassten Dicke der Isolierung durchgeführt wird.

10. Verfahren nach Anspruch 9, wobei der zugeführte isolierter metallischer Flachdraht (D) aufeinander folgend an seinen beiden flachen Seiten abisoliert wird.

11. Verfahren nach Anspruch 10, wobei für jede der beiden flachen Seiten des zugeführten isolierten metallischen Flachdrahts (D) jeweils eine Dicke der Isolierung an wenigstens einer Position erfasst wird.

12. Verfahren nach einem Ansprüche 9 bis 11, wobei ferner eine bekannte Metalldicke des isolierten metallischen Flachdrahts (D) zur Einstellung der Vorrichtung zum Abisolieren (20) herangezogen wird, wobei insbesondere die Abisoliertiefe beim Abisolieren der zweiten flachen Seite anhand der erfassten Gesamtdicke des isolierten metallischen Flachdrahts (D), der erfassten Dicke der Isolierung an wenigstens einer Position der ersten Seite und der bekannten Metalldicke eingestellt wird.

13. Verfahren nach einem der Ansprüche 9 bis 12, wobei durch die Vorrichtung zum Abisolieren (20) während eines Abisolierens ferner eine Fase in dem Metall des isolierten metallischen Flachdrahts (D) gebildet wird.

14. Verfahren nach einem der Ansprüche 9 bis 13, ferner umfassend einen Schritt eines Abisolierens von wenigstens einer die flachen Seiten des isolierten metallischen Flachdrahts (D) verbindenden schmalen Seite mittels einer weiteren Vorrichtung zum Abisolieren.

## Claims

1. Device (10) for adaptively stripping insulated flat metal wires (D), comprising:
- at least one device (14) for detecting the overall thickness of a supplied insulated flat metal wire (D);
- at least one device (16) for detecting a thickness of the insulation of the supplied insulated flat metal wire (D) at at least one position;
- at least one adjustable device (20) for mechanically stripping the supplied insulated flat metal wire (D) on at least one of its flat sides, the device (20) for mechanical stripping being adjustable in terms of its stripping depth and comprising a mechanical stripping means (24); and
- a control unit (18), which is operatively coupled to the at least one device (14) for detecting the overall thickness and the at least one device (16) for detecting the thickness of the insulation and is designed to adjust the device (20) for mechanical stripping with respect to its stripping depth on the basis of the detected thicknesses, **characterised in that** the at least one device (20) for mechanical stripping comprises two linear actuators (22a, 22b), which can be operated in a coordinated manner, of which a first (22a) is designed to shift the stripping means (24) at a predetermined angle, preferably a right angle, to the wire (D) to be stripped and thus to adjust the stripping depth, and a second (22b) is designed to shift the mechanical stripping means (24) linearly along the extension of the insulated flat metal wire (D).

2. Device (10) according to claim 1,
wherein the at least one device (16) for detecting the thickness of the insulation comprises an eddy current sensor and/or wherein the device (14) for detecting the overall thickness comprises a distance sensor or a force-limited contact sensor.

3. Device (10) according to either of the preceding claims,
wherein the first and the second linear actuator (22a, 22b) are aligned with substantially parallel axes, wherein a deflection device (26) is also provided, which is designed to deflect the linear movement of the first linear actuator (22a) by the predetermined angle.

4. Device (10) according to claim 3,
wherein the deflection device (26) is also designed such that when the linear movement is deflected, the movement is also reduced.

5. Device (10) according to either claim 3 or claim 4,
wherein the first and the second linear actuator (22a, 22b) are designed to carry out a synchronous movement at least in part during stripping.

6. Device (10) according to any of the preceding claims,
comprising two devices (20) for mechanical stripping, which are designed to successively strip the two sides of the insulated flat metal wire (D) to be stripped, wherein preferably one of the two devices (20) for mechanical stripping further comprises a profiled support on which the supplied insulated flat metal wire (D) is to be placed after its first side has been stripped in order for its second side to be stripped, wherein the profiling is complementary to the expected contour of the already stripped side of the insulated flat metal wire (D).

7. Device (10) according to any of the preceding claims,
further comprising at least one further device for stripping, which is designed to strip at least one narrow side connecting the flat sides of the insulated flat metal wire (D).

8. Device (10) according to any of the preceding claims,
further comprising a cutting unit which is designed to cut off the insulated flat metal wire (D) prior to stripping it.

9. Method for adaptively stripping insulated flat metal wires (D), to be carried out in a device (10) according to any of the preceding claims, comprising the following steps:
- detecting an overall thickness of a supplied insulated flat metal wire (D);
- detecting a thickness of the insulation of the supplied insulated flat metal wire (D) at at least one position; and
- mechanically stripping the supplied insulated flat metal wire (D) by means of an adjustable device (20) for mechanical stripping on at least one of its flat sides, wherein a stripping depth of the device (20) for stripping is adjusted on the basis of the detected overall thickness of the insulated flat metal wire (D) and the detected thickness of the insulation.

10. Method according to claim 9, wherein the supplied insulated flat metal wire (D) is successively stripped on its two flat sides.

11. Method according to claim 10, wherein a thickness of the insulation is detected at at least one position for each of the two flat sides of the supplied insulated flat metal wire (D).

12. Method according to any of claims 9 to 11, wherein a known metal thickness of the insulated flat metal wire (D) is also used to adjust the device (20) for stripping, wherein in particular the stripping depth when stripping the second flat side is adjusted on the basis of the detected overall thickness of the insulated flat metal wire (D), the detected thickness of the insulation at at least one position on the first side, and the known metal thickness.

13. Method according to any of claims 9 to 12, wherein the device (20) for stripping also forms a bevel in the metal of the insulated flat metal wire (D) during stripping.

14. Method according to any of claims 9 to 13, further comprising a step of stripping at least one narrow side connecting the flat sides of the insulated flat metal wire (D) by means of an additional device for stripping.

## Revendications

1. Dispositif (10) pour le dénudage adaptatif de fils métalliques plats isolés (D), comprenant :
- au moins un dispositif de détection de l'épaisseur totale (14) d'un fil métallique plat isolé (D) fourni ;
- au moins un dispositif de détection d'une épaisseur de l'isolation (16) du fil métallique plat isolé (D) fourni, en au moins une position ;
- au moins un dispositif réglable (20) pour dénuder mécaniquement le fil métallique plat isolé (D) fourni sur au moins une de ses faces planes, le dispositif de dénudage mécanique (20) étant réglable en ce qui concerne sa profondeur de dénudage et comprenant un moyen de dénudage mécanique (24) ; et
- une unité de commande (18) couplée de manière opérationnelle audit au moins un dispositif de détection de l'épaisseur totale (14) et audit au moins un dispositif pour détecter l'épaisseur de l'isolation (16), et adaptée pour régler le dispositif de dénudage mécanique (20) en ce qui concerne sa profondeur de dénudage sur la base des épaisseurs détectées,
**caractérisée en ce que** ledit au moins un dispositif de dénudage mécanique (20) comprend deux actionneurs linéaires (22a, 22b) opérables de manière coordonnée, dont un premier (22a) est adapté pour déplacer le moyen de dénudage (24) selon un angle prédéterminé,
de préférence un angle droit, par rapport au fil (D) à dénuder et ainsi régler la profondeur de dénudage, et un deuxième (22b) est adapté pour déplacer le moyen de dénudage mécanique (24) linéairement le long de l'extension du fil métallique plat isolé (D).

2. Dispositif (10) selon la revendication 1,
dans lequel ledit au moins un dispositif de détection de l'épaisseur de l'isolation (16) comprend un capteur à courants de Foucault et/ou dans lequel ledit dispositif de détection de l'épaisseur totale (14) comprend un capteur de distance ou un capteur de contact à force limitée.

3. Dispositif (10) selon l'une des revendications précédentes,
dans lequel le premier et le deuxième actionneurs linéaires (22a, 22b) sont alignés avec des axes sensiblement parallèles, dans lequel il est en outre prévu un dispositif de renvoi (26) adapté pour renvoyer le mouvement linéaire du premier actionneur linéaire (22a) selon l'angle prédéterminé.

4. Dispositif (10) selon la revendication 3,
dans lequel le dispositif de déviation (26) est en outre adapté de telle sorte que, lors de la déviation du mouvement linéaire, on provoque en outre une réduction du mouvement.

5. Dispositif (10) selon la revendication 3 ou 4,
dans lequel le premier et le deuxième actionneurs linéaires (22a, 22b) sont adaptés pour effectuer au moins par sections un mouvement synchrone pendant un dénudage.

6. Dispositif (10) selon l'une des revendications précédentes,
comprenant deux dispositifs de dénudage mécanique (20) aptes à dénuder successivement les deux faces du fil métallique plat isolé (D) à dénuder, dans lequel de préférence l'un des deux dispositifs de dénudage mécanique (20) comprend en outre un support profilé, sur lequel le fil métallique plat isolé (D) fourni doit être posé après un dénudage de sa première face pour un dénudage de sa deuxième face, le profilage étant complémentaire au contour attendu de la face déjà dénudée du fil métallique plat isolé (D).

7. Dispositif (10) selon l'une des revendications précédentes,
comprenant en outre au moins un autre dispositif de dénudage adapté pour dénuder au moins une face étroite reliant les faces planes du fil métallique plat isolé (D).

8. Dispositif (10) selon l'une des revendications précédentes,
comprenant en outre une unité de coupe adaptée pour couper le fil métallique plat isolé (D) avant de le dénuder.

9. Procédé de dénudage adaptatif de fils métalliques plats isolés (D), mis en œuvre dans un dispositif (10) selon l'une des revendications précédentes,
comprenant les étapes suivantes :
- détecter une épaisseur totale d'un fil métallique plat isolé (D) fourni,
- détecter une épaisseur d'isolation du fil métallique plat isolé (D) fourni à au moins une position ; et
- dénuder mécaniquement le fil métallique plat isolé (D) fourni, au moyen d'un dispositif de dénudage mécanique (20) réglable sur au moins une de ses faces planes, dans lequel le réglage d'une profondeur de dénudage du dispositif de dénudage (20) est effectué à partir de l'épaisseur totale détectée du fil métallique plat isolé (D) et de l'épaisseur détectée de l'isolant.

10. Procédé selon la revendication 9, dans lequel le fil plat métallique isolé (D) fourni est dénudé successivement sur ses deux faces planes.

11. Procédé selon la revendication 10, dans lequel, pour chacune des deux faces planes du fil métallique plat isolé (D) fourni, on détecte respectivement une épaisseur de l'isolant en au moins une position.

12. Procédé selon l'une des revendications 9 à 11,
dans lequel on utilise en outre une épaisseur de métal connue du fil métallique plat isolé (D) pour régler le dispositif de dénudage (20), la profondeur de dénudage lors du dénudage de la deuxième face plane étant notamment réglée à partir de l'épaisseur totale détectée du fil métallique plat isolé (D), de l'épaisseur détectée de l'isolant en au moins une position de la première face et de l'épaisseur de métal connue.

13. Procédé selon l'une des revendications 9 à 12,
dans lequel le dispositif de dénudage (20) permet en outre de former un chanfrein dans le métal du fil métallique plat isolé (D) pendant un dénudage.

14. Procédé selon l'une des revendications 9 à 13,
comprenant en outre une étape de dénudage d'au moins une face étroite reliant les faces planes du fil métallique plat isolé (D) au moyen d'un autre dispositif de dénudage.
